(19) **Europäisches Patentamt European Patent Office Office européen des brevets**

(11) **EP 4 600 102 B1**

(12) **EUROPEAN PATENT SPECIFICATION**

(45) Date of publication and mention
of the grant of the patent:
**15.07.2026 Bulletin 2026/29**

(21) Application number: **25152971.5**

(22) Date of filing: **20.01.2025**

(51) International Patent Classification (IPC):
*B60W 30/09* (2012.01)    *B60W 30/12* (2020.01)
*B60W 50/029* (2012.01)    *B60W 60/00* (2020.01)
*B60W 50/00* (2006.01)

(52) Cooperative Patent Classification (CPC):
**B60W 30/09; B60W 30/12; B60W 50/029;
B60W 60/0053;** B60W 2050/0088; B60W 2540/103;
B60W 2540/12; B60W 2540/18; B60W 2552/05;
B60W 2552/20; B60W 2552/53; B60W 2554/4029

(54) **DRIVING CONTROL APPARATUS FOR VEHICLE**

ANTRIEBSSTEUERUNGSVORRICHTUNG FÜR EIN FAHRZEUG

APPAREIL DE COMMANDE DE CONDUITE POUR VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.02.2024 JP 2024016468**

(43) Date of publication of application:
**13.08.2025 Bulletin 2025/33**

(73) Proprietor: **Suzuki Motor Corporation
Shizuoka 432-8611 (JP)**

(72) Inventor: **SATO, Katsuhiko
HAMAMATSU-SHI, 432-8611 (JP)**

(74) Representative: **Plasseraud IP
104 Rue de Richelieu
CS92104
75080 Paris Cedex 02 (FR)**

(56) References cited:
**EP-A1- 4 052 982**    **JP-A- 2018 030 425**
**US-A1- 2019 291 728**

## Description

[Technical Field]

The present invention relates to a driving control apparatus for a vehicle, and more specifically relates to vehicle travel control during operation of a minimal risk maneuver in a case in which a system fault has occurred and during operation of emergency avoidance control for avoiding collision with obstacles.

[Background Art]

Technologies of driving a vehicle with an autonomous operation device under specific conditions are being developed. A driving control apparatus configured to perform automated driving with the autonomous operation device has an MRM function to execute a minimal risk maneuver (MRM) that decelerates and stops the vehicle in a lane or pulls the vehicle off to a road shoulder in a case in which a system fault or the like has occurred during automated driving. The driving control apparatus also has an emergency maneuver (EM) function to cause a transition to emergency avoidance control to avoid collision in a case in which collision with an obstacle is predicted. The EM function is configured to, for example, avoid a risk by decelerating and stopping the vehicle in a lane or by pulling the vehicle off to a road shoulder with combination of maximum deceleration and steering. The driving control apparatus is normally configured to prioritize an override operation by a driver and to transfer authority to the driver when the override operation is performed during operation of an automated driving function including the MRM function and the EM function.

For example, Patent Literature 1 discloses a driving support device configured to execute, in a case in which the driver has performed a steering operation during execution of collision avoidance braking control and/or lane departure prevention control and a steering override condition is satisfied, steering override to prioritize the steering operation by the driver by ending the corresponding collision avoidance braking control and/or the lane departure prevention control. When it is determined that a steering direction in which the steering wheel is turned by the lane departure prevention control is the same as the direction of collision avoidance by the collision avoidance braking control, a steering related threshold value is increased from a first steering related threshold value to a second steering related threshold value so that the steering override condition is harder to be satisfied even when the driver performs a steering operation. According to another example, Patent Literature 2 describes a driving control apparatus for vehicle having an emergency avoidance function and a risk minimization function during operation of an automated lane keeping system.

[Citation List]

[Patent Literature]

[Patent Literature 1] JP 2021-094955 A
[Patent Literature 2] EP 4052982 A1

[Summary of Invention]

[Problem to be Solved by the Invention]

A traffic circle (or roundabout) is well-known as a type of intersection installed on a road. The traffic circle connects a plurality of roads through a circular space so that vehicles circulate in one direction on a circulatory roadway around a central island at the center of the circular space. In the traffic circle, a vehicle circulates on the circulatory roadway and exits from an exit connected to a desired road. In a case in which the MRM function or the EM function is activated while a vehicle is traveling in a traffic circle by automated driving, the driver may become flustered by start of the activation of the MRM function or the EM function and may perform an excessive driving operation to execute override. Execution of such excessive override during traveling in a traffic circle may cause contact and collision with surrounding structures or other vehicles in the traffic circle.

The present invention is made in view of the actual situation as described above and is intended to reduce the risk of contact and collision with surrounding structures or other traffic participants in a traffic circle by reducing excessive override during traveling in the traffic circle by automated driving.

[Means for Solving the Problem]

According to an aspect of the present invention defined in the independent claim 1, a driving control apparatus for a vehicle including an autonomous operation device for executing an automated driving function includes: an MRM function to execute a minimal risk maneuver in a case in which a system fault has occurred during operation of the automated driving function, the minimal risk maneuver including decelerating and stopping the vehicle in a lane; an EM function to execute emergency avoidance control that includes activation of an emergency brake in a case in which collision with an obstacle existing around the vehicle is expected during operation of the automated driving function; and an override function to stop any function in operation and transfer authority to a driver in a case in which the driver has performed operational intervention equal to or greater than a predetermined threshold value during operation of the automated driving function, the MRM function, or the EM function, and the override function is configured to set the predetermined threshold value for activating the override function to different values depending on whether the vehicle is traveling inside or outside a traffic circle.

[Advantageous Effect of Invention]

A driving control apparatus for a vehicle according to the present invention can reduce the risk of traffic flow disruption and contact and collision with other traffic participants in a traffic circle by reducing excessive override during traveling in the traffic circle by automated driving.

[Brief Description of Drawings]

[Figure 1] Figure 1 is a schematic view illustrating a driving control apparatus for a vehicle according to one embodiment of the present invention.
[Figure 2] Figure 2 is a schematic plan view illustrating an external sensor group of the vehicle.
[Figure 3] Figure 3 is a block diagram illustrating the driving control apparatus for the vehicle.
[Figure 4] Figure 4 is a diagram illustrating behavior of the vehicle in a case in which an MRM function or an EM function is activated in a traffic circle.
[Figure 5] Figure 5 is a flowchart for description of the process of control in the present embodiment.

[Modes for Carrying Out the Invention]

First Embodiment

A first embodiment of the present invention will be described below in detail with reference to the accompanying drawings. A driving control apparatus for a vehicle 1 according to the present embodiment is configured to be able to execute SAE (Society of Automotive Engineers) Level 4 equivalent automated driving that performs all driving operations in an operational design domain (ODD). Note that the driving control apparatus for the vehicle 1 according to the present embodiment may be configured to communicate with a remote operation base station through a non-illustrated communication device and execute automated traveling under remote monitoring and remote operation by the remote operation base station.

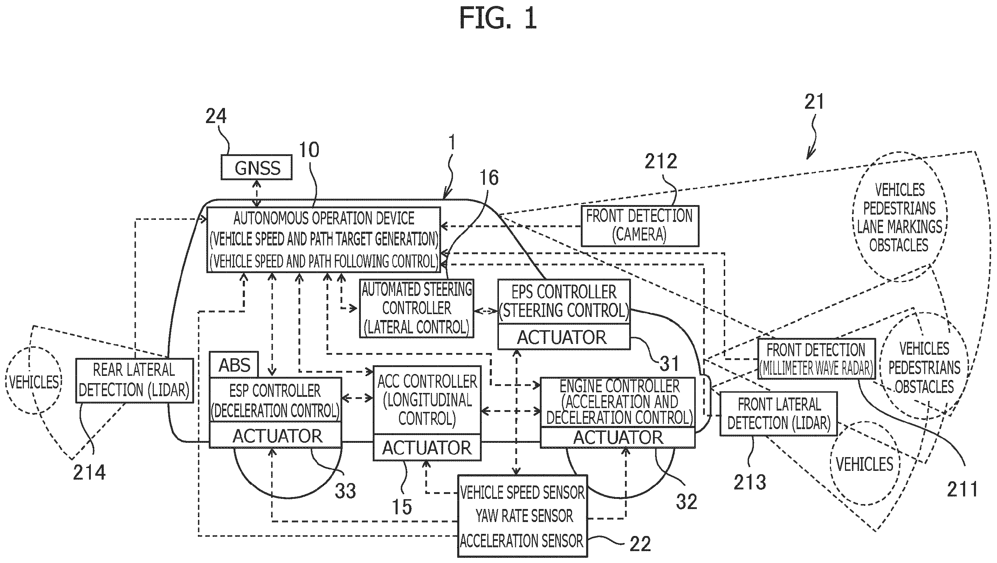

In Figures 1 to 3, in order for the vehicle to perform recognition, determination, and operation that have been conventionally performed by a driver, the vehicle 1 provided with the driving control apparatus according to the present embodiment includes external sensors 21 that sense a vehicle surrounding environment, internal sensors 22 that sense vehicle information, a map information database 23, a positioning means 24, a controller/actuator group for speed control and steering control, an ACC controller 15 for inter-vehicular distance control, an automated steering controller 16 for automated steering control, and an autonomous operation device 10 for executing path tracking control by collectively controlling these components, in addition to typical automobile constituent components such as an engine and a vehicle body.

The controller/actuator group for speed control and steering control includes an electric power steering (EPS) controller 31 for steering control, an engine controller 32 for acceleration/deceleration control, and an ESP/ABS controller 33. An ESP (registered trademark; electronic stability program) constitutes a stability control system (vehicle behavior stabilization control system) including an ABS (anti-lock braking system).

The external sensors 21 includes a plurality of sensing means for inputting, to the autonomous operation device 10, as external data such as image data and point cloud data, lane markings on a road that define the vehicle's line and adjacent lanes, existence and relative distances of other vehicles, obstacles, persons, and the like around the vehicle.

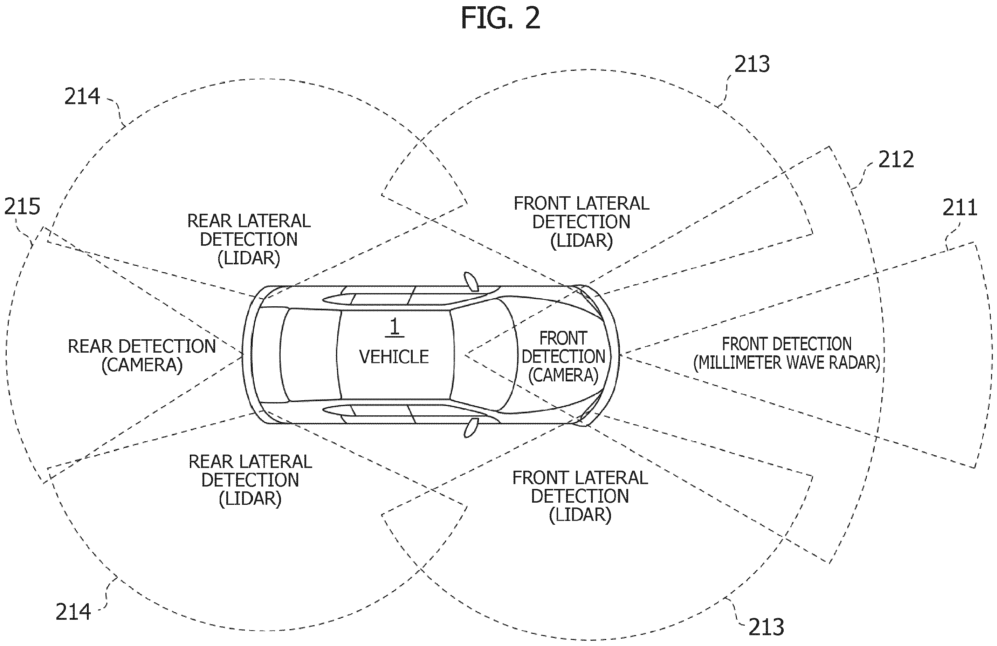

For example, as illustrated in Figure 2, the vehicle 1 includes a millimeter wave radar (211) and a camera (212) as front detection means 211 and 212, a LIDAR (laser imaging, detection, and ranging) as a front lateral detection means 213 and a rear lateral detection means 214, and a camera (back camera) as a rear detection means 215. The external sensors 21 cover 360° around the vehicle and can detect the positions and distances of other vehicles, obstacles, and the like in predetermined ranges in the front, rear, right, and left directions of the vehicle, and the lane marking positions of the vehicle's line and adjacent lanes. Note that a millimeter wave radar (or LIDAR) may be added as the rear detection means.

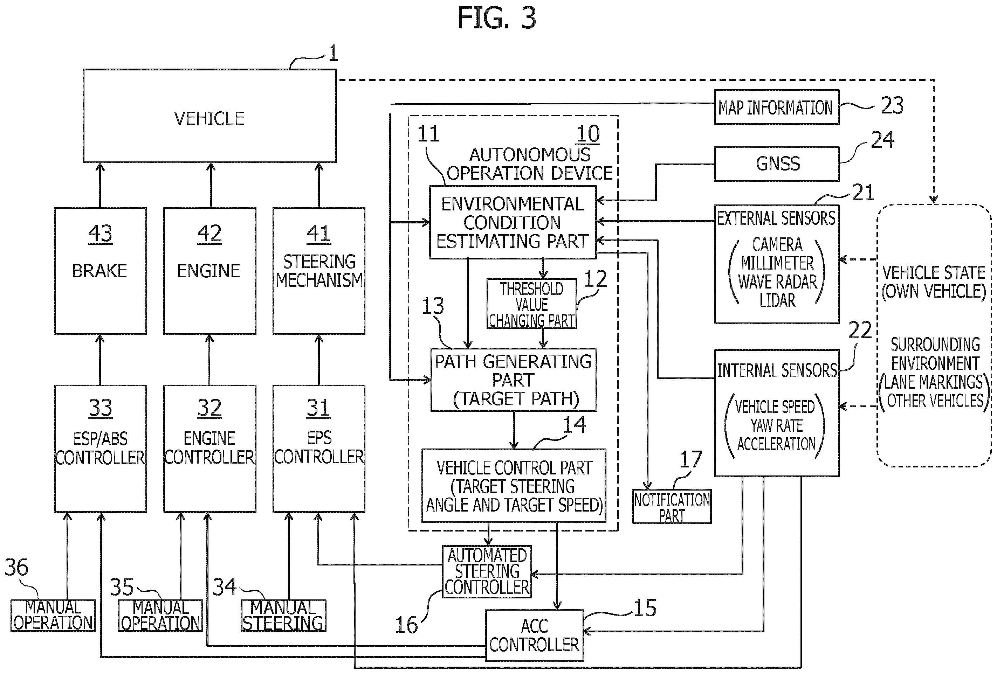

The internal sensors 22 includes a plurality of sensing means such as a vehicle speed sensor, a yaw rate sensor, and an acceleration sensor, which measure physical quantities indicating the motion state of the vehicle. As illustrated in Figure 3, measurement values of the internal sensors 22 are input to the autonomous operation device 10, the ACC controller 15, the automated steering controller 16, and the EPS controller 31 and are subjected to arithmetic processing together with inputs from the external sensors 21.

The external sensors 21 and the internal sensors 22 are configured to start operating simultaneously with activation of the vehicle 1 and to constantly detect the surrounding environment and vehicle information.

The autonomous operation device 10 includes an environmental condition estimating part 11, an override threshold value changing part 12, a path generating part 13, and a vehicle control part 14 and is configured as a computer for performing functions as described below, the computer including a ROM in which computer programs and data are stored, a CPU that performs arithmetic processing, a RAM onto which the computer programs and data are read and in which dynamic data and arithmetic processing results are stored, an input-output interface, and the like.

The environmental condition estimating part 11 acquires the absolute position of the vehicle by matching between own-vehicle position information obtained by the positioning means 24, such as the Global Navigation Satellite System (GNSS), and map information in the map information database 23. The environmental condition estimating part 11 estimates the lane marking positions of the vehicle's line and adjacent lanes and the positions and speeds of other vehicles based on external data such as image data and point cloud data acquired by the external sensors 21.

Note that instead of acquiring the absolute position of the vehicle 1 based on the own-vehicle position information obtained by the positioning means 24 and the map information in the map information database 23, the environmental condition estimating part 11 may be configured to estimate the current position of the vehicle by using Simultaneous Localization and Mapping (SLAM) or acquiring the position of the vehicle 1 relative to the lane markings of adjacent lanes obtained from the camera 212 included in the external sensors 21. The camera 212 included in the external sensors 21, or the positioning means 24 such as GNSS constitutes a position detecting part that detects the current position of the vehicle 1.

The environmental condition estimating part 11 is configured to be able to additionally acquire information related to a road shape, such as whether a traffic circle exists on a road and whether there is a pull-off space (evacuation space) around the traffic circle in which the vehicle can be stopped, based on the map information in the map information database 23, for example. A traffic circle will be described later. In addition, the environmental condition estimating part 11 acquires the motion state of the vehicle 1 based on internal data measured by the internal sensors 22.

The autonomous operation device 10 has an MRM function to execute a minimal risk maneuver (MRM) that decelerates and stops the vehicle in a lane or pulls the vehicle off to a road shoulder in a case in which a system fault or the like has occurred during operation of an automated driving function, and an emergency maneuver (EM) function to cause a transition to emergency avoidance control to avoid collision in a case in which collision with an obstacle is predicted. The autonomous operation device 10 additionally has an override function to prioritize an override operation and to transfer authority to the driver in a case in which the driver or a passenger of the vehicle 1 has performed the override operation during operation of the automated driving function including the MRM function and the EM function.

The override threshold value changing part 12 is configured to set an override threshold value for determining whether the driver has performed an override operation based on information input from the environmental condition estimating part 11. Specifically, the override threshold value changing part 12 is configured to set the override threshold value to different values depending on whether the vehicle 1 is traveling inside or outside a traffic circle. The override threshold value will be described later.

The path generating part 13 is configured to generate a target path from the own-vehicle position estimated by the environmental condition estimating part 11 to a final destination. The path generating part 13 searches for a route from a starting point to a destination based on the own-vehicle position information and the map information and generates a rough target path, also referred to as a global path. The path generating part 13 also generates a detailed target path, also referred to as a local path, in automated travel such as lane-keeping travel, lane change, and traveling path change based on the lane marking positions of adjacent lanes, the positions and speeds of other vehicles, and the motion state of the vehicle, which are estimated by the environmental condition estimating part 11. The path generating part 13 is configured to additionally generate a target path to a target stopping position for EM operation or MRM operation in a case in which the vehicle 1 is to be stopped by operation of the EM function or the MRM function.

The vehicle control part 14 calculates a target vehicle speed and a target steering angle based on a target path generated by the path generating part 13, transmits a speed command for constant speed travel or inter-vehicular distance maintaining and following travel to the ACC controller 15, and transmits a steering angle command for path following to the EPS controller 31 through the automated steering controller 16.

Note that the vehicle speed is also input to the EPS controller 31 and the ACC controller 15. Since steering reaction force changes with the vehicle speed, the EPS controller 31 refers to a map of steering angle and steering torque for each vehicle speed and transmits a torque command to a steering mechanism 41. Motion of the vehicle 1 in the longitudinal direction and the lateral direction is controlled as the engine controller 32, the ESP/ABS controller 33, and the EPS controller 31 control an engine 42, a brake 43, and the steering mechanism 41. Note that, for example, an electric motor may be used in place of or in addition to the engine 42 as a drive device of the vehicle 1.

Overview of automated driving system

The following describes an overview of an automated driving system. The automated driving system is a combined system of an adaptive cruise control system (ACCS) and a continuous automated steering system that continuously and automatically performs lane maintaining and lane change. The automated driving system can execute the automated driving function in a state in which the ACC controller 15 constituting the adaptive cruise control system (ACCS) and the automated steering controller 16 constituting the continuous automated steering system are both operating together with the autonomous operation device 10.

The driver of the vehicle 1 sets a starting point and a destination before departure of the vehicle 1. In a case in which the vehicle 1 employs an automated driving system of a remote-monitoring and remote-operation scheme, the starting point and the destination may be set by an operator of a remote operation base station. The path generating part 13 generates a global path from the starting point to the destination based on the own-vehicle position information and the map information obtained from the environmental condition estimating part 11. The path generating part 13 generates a local path and a target vehicle speed based on the generated global path as well as external information (such as lanes, own-vehicle position, own-vehicle travel lane, the positions and speeds of other vehicles traveling in adjacent lanes, and existence of pedestrians and bicycles) acquired by the external sensors 21 and internal information (such as vehicle speed, yaw rate, and acceleration rate) acquired by the internal sensors 22.

When having determined that environment conditions and road conditions are maintained within the operational design domain (ODD) of the system, the driver of the vehicle 1 or the operator of the remote operation base station transmits a start command to the autonomous operation device 10 for the vehicle 1 to travel in accordance with the generated target path and target vehicle speed.

The vehicle control part 14 estimates the speed, posture, and lateral displacement of the vehicle 1 after $\Delta t$ seconds based on the own-vehicle position and a motion characteristic of the vehicle 1, in other words, the relation between a yaw rate $\gamma$ and a lateral acceleration rate $(d^2y/dt^2)$ that are generated by vehicle movement with a front wheel steering angle $\delta$ that occurs when a steering torque T is applied to the steering mechanism 41 during traveling at a vehicle speed V. The vehicle control part 14 provides a steering angle command with which the lateral displacement becomes equal to yt after $\Delta t$ seconds to the EPS controller 31 through the automated steering controller 16, and provides a speed command with which the speed becomes equal to Vt after $\Delta t$ seconds to the ACC controller 15.

The ACC controller 15, the automated steering controller 16, the EPS controller 31, the engine controller 32, and the ESP/ABS controller 33 operate independently of automated steering, but are also operable according to command inputs from the autonomous operation device 10 during operation of the automated driving system.

When having received a deceleration command from the ACC controller 15, the ESP/ABS controller 33 outputs a hydraulic command to an actuator and controls the vehicle speed by controlling braking force of the brake 43. When having received an acceleration/deceleration command from the ACC controller 15, the engine controller 32 provides a torque command to the engine 42 by controlling an actuator output (throttle opening degree) so as to control the vehicle speed by controlling driving force.

An ACC system (ACCS) functions with combination of hardware and software, such as the millimeter wave radar as the front detection means 211 constituting the external sensors 21, the ACC controller 15, the engine controller 32, and the ESP/ABS controller 33.

Specifically, in a case in which there is no preceding vehicle, the vehicle 1 travels at a constant speed with an ACC set speed (set speed) as a target vehicle speed. When having caught up to a preceding vehicle (in a case in which the speed of the preceding vehicle is equal to or slower than the ACC set speed), the vehicle 1 travels by following the preceding vehicle according to the speed of the preceding vehicle while maintaining an inter-vehicular distance (set inter-vehicular distance) in accordance with a set time gap (time headway = "inter-vehicular distance"/"own-vehicle speed").

The continuous automated steering system senses lane markings, the position of the own vehicle, and the positions and speeds of other vehicles traveling in adjacent lanes by the environmental condition estimating part 11 of the autonomous operation device 10 based on image data and point cloud data acquired by the external sensors 21 and vehicle information acquired by the internal sensors 22. Based on these pieces of information, the continuous automated steering system performs steering control by the EPS controller 31 through the automated steering controller 16 to execute lane maintaining control to travel along the center of a lane and lane change control across a lane marking.

That is, when having received the steering angle command from the automated steering controller 16, the EPS controller 31 refers to a map of vehicle speed, steering angle, and steering torque, and outputs a torque command to an actuator (EPS motor) so that the steering mechanism 41 provides a front wheel steering angle designated as a target.

As described above, the automated driving system is a system configured by combining longitudinal control (speed control and inter-vehicular distance control) by the ACC controller 15 and lateral control (lane maintaining control and lane change control) by the automated steering controller 16.

Emergency avoidance control (EM) at collision prediction

In a case in which another traffic participant (obstacle) enters an automated travel target path of the vehicle 1, such as sudden stop of a preceding vehicle or cut-in by another vehicle, and collision with the obstacle is predicted during operation of the automated driving function described above, the emergency maneuver (EM) function is activated so as to execute the emergency avoidance control. The EM function includes activation of autonomous emergency braking (AEB) for collision avoidance or collision damage reduction. The EM function is configured to, for example, avoid a risk by decelerating and stopping the vehicle in a lane or moving the vehicle to a road shoulder with combination of maximum deceleration with steering.

The environmental condition estimating part 11 calculates a time to collision (TTC = "inter-vehicular distance"/"relative speed") to an obstacle (for example, a preceding vehicle) based on information (for example, inter-vehicular distance and relative speed) of the obstacle sensed by the external sensors 21 and the vehicle speed of the vehicle 1 sensed by the internal sensors 22. In a case in which the probability of collision with the obstacle is determined to be high, for example, in a case in which the time to collision TTC is equal to or less than a predetermined value, the autonomous operation device 10 transmits a deceleration request (hydraulic command) to an actuator of the brake 43 through the ACC controller 15 so as to activate autonomous emergency braking. For example, in order to pull the vehicle 1 over to a road shoulder, the autonomous operation device 10 transmits a steering angle command for path following to the EPS controller 31 through the automated steering controller 16.

Before and during operation of the EM function, notification to the driver and passengers of the vehicle 1 and road users outside the vehicle is performed with a notification part 17. Note that the notification part 17 may be configured to notify the inside and outside of the vehicle that automated travel of the vehicle 1 has stopped. As means of the notification by the notification part 17, visual means such as lamp illumination or text display and/or auditory means such as voice output may be used.

Minimal risk maneuver (MRM) at system fault

The minimal risk maneuver (MRM) that decelerates and stops the vehicle in a lane or pulls the vehicle off to a road shoulder is executed in a case in which, for example, a serious failure or fault has occurred to the system during operation of the automated driving function. A serious failure or fault of the system includes, for example, engine oil pressure drop, engine coolant temperature rise, and braking system anomaly that could cause accidents, fire, or the like. The autonomous operation device 10 can determine whether a serious failure or fault has occurred to the system by, for example, a non-illustrated self-diagnosis function of the vehicle 1.

In a case in which it is determined that a serious failure or fault has occurred to the system, the autonomous operation device 10 activates the MRM function. The MRM function includes, for example, control (safe stop) to pull the vehicle 1 off to a road shoulder or decelerate and stop the vehicle 1 in a lane. When activating the MRM function, the autonomous operation device 10 transmits a deceleration request (hydraulic command) to the actuator of the brake 43 through the ACC controller 15 and transmits a steering angle command for path following to the EPS controller 31 through the automated steering controller 16.

Before and during operation of the MRM function, notification to the driver and passengers of the vehicle 1 and road users outside the vehicle is performed with the notification part 17. Note that the notification part 17 may be configured to notify the inside and outside of the vehicle that automated travel of the vehicle 1 has stopped.

Override function

The above-described driving control apparatus is configured to allow override due to operational intervention by the driver or a passenger during operation of the automated driving function or during operation of the EM function and the MRM function. Specifically, the override function is a function to stop any function in operation and to transfer authority to the driver in a case in which the driver has performed operational intervention equal to or greater than a predetermined threshold value during operation of the automated driving function, the EM function, or the MRM function.

In a case in which acceleration override due to acceleration operational intervention or deceleration override due to deceleration operational intervention by the driver is executed, the longitudinal control (speed control and inter-vehicular distance control) is stopped, transition is made to a manual operation mode, and manual acceleration and deceleration operations 35 and 36 become possible. In a case in which steering override due to steering intervention by the driver is executed, the lateral control (lane maintaining control and lane change control) is stopped, transition is made to a manual operation mode, and manual steering 34 becomes possible.

Specifically, the longitudinal control is overridden in a case in which an engine torque request due to the manual operation 35 of the acceleration pedal by the driver or a deceleration request due to the manual operation 36 of the brake pedal is equal to or greater than a corresponding override threshold value. The override threshold values (acceleration and deceleration override threshold values) related to the acceleration and deceleration operations are set to, for example, an acceleration operation amount (engine torque command value) or brake operation amount (ESP hydraulic command value) with which it is determined that the driver has intentionally performed the acceleration and deceleration operations, depending on the acceleration and deceleration characteristics and travel state of the vehicle.

The lateral control is overridden in a case in which steering torque due to the manual steering 34 by the driver is equal to or greater than an override threshold value. The override threshold value (steering override threshold value) related to a steering operation is set, for example, depending on the steering characteristics and travel state of the vehicle 1. The manual steering operation 34 and the manual acceleration and deceleration operations 35 and 36 may be configured to be detected by the internal sensors 22, for example.

As described above, the override function is executable during operation of the EM function or the MRM function. Thus, when switching occurs from the automated driving function in which automated travel is performed to the EM function or the MRM function, the driver may be flustered by activation notification of the EM function or the MRM function or control of the vehicle 1 upon activation of the EM function or the MRM function. If excessive override such as an excessive acceleration or deceleration operation or an excessive steering operation is performed by the flustered driver, the behavior of the vehicle 1 may become unstable or the vehicle 1 may rapidly approach a surrounding obstacle or a surrounding structure.

Especially at an intersection with a potential for crossing with another traffic participant, contact and collision with another traffic participant or a surrounding structure may potentially be caused due to excessive override by the driver.

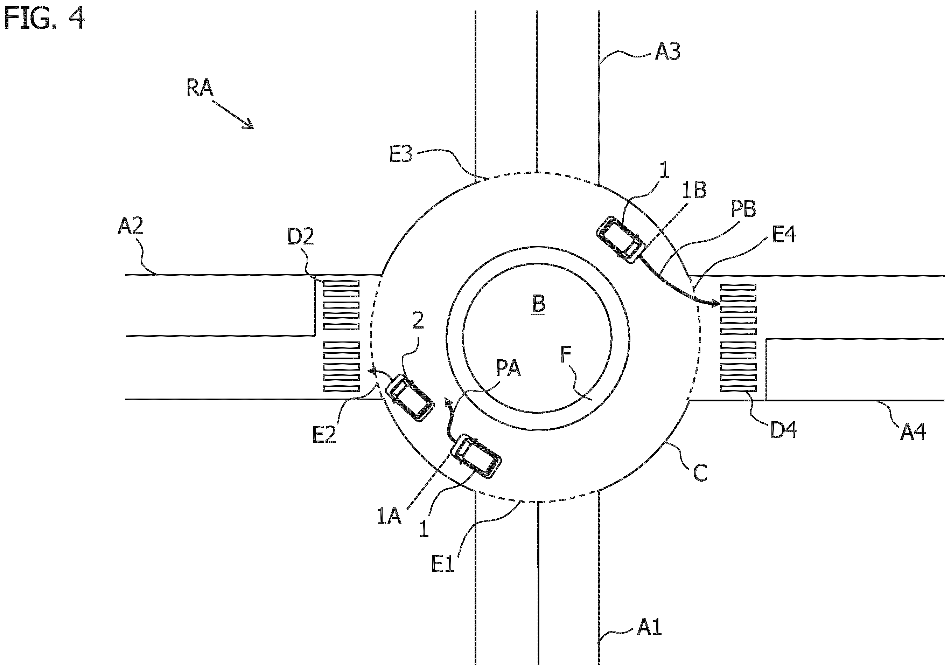

As a type of intersection, a traffic circle (or roundabout) is installed on a road in some cases. As illustrated in Figure 4, the traffic circle connects a plurality of roads through a circular space so that vehicles circulate in one direction on a circulatory roadway around a central island at the center of the circular space. Typically, no stop signs nor traffic lights are installed on the circulatory roadway of the traffic circle. Typically, no road shoulders nor road side strips are provided on the circulatory roadway of the traffic circle, and a predetermined area including the inside of the traffic circle is set as a vehicle no-parking and no-stopping zone. In the traffic circle, traffic in the circulatory roadway is prioritized. When no vehicles are traveling through the circulatory roadway, a vehicle entering the traffic circle enters the circulatory roadway at a slow speed without stopping. In this manner, the traffic circle differs in form from conventional intersections such as crossroads and T-junctions.

Figure 4 illustrates an exemplary traffic circle RA in a case of left-side driving rules. The traffic circle RA illustrated in Figure 4 has a configuration in which four roads A1 to A4 are connected and vehicles travel clockwise through a circulatory roadway C around a central island B. Pedestrian crosswalks D2 and D4 are installed on the roads A2 and A4, respectively, of the traffic circle RA. An apron F is formed between the central island B and the circulatory roadway C of the traffic circle RA. The apron F is a part that a large-sized vehicle, such as a semi-trailer or articulated truck, which has difficulty traveling within the width of the circulatory roadway C is permitted to partially drive over and travel on.

Note that, in a case of right-side driving rules, vehicles travel anticlockwise through the circulatory roadway C of the traffic circle RA. The following description will be made with an example of a left-side driving

For example, assume a case in which the vehicle 1 enters the traffic circle RA from an entrance E1 and the EM function is activated while the vehicle 1 is traveling in the circulatory roadway C. The position of the vehicle 1 is a position 1A, and a preceding vehicle 2 is about to exit the traffic circle RA from an exit E2. For example, in a case in which the EM function is activated when the preceding vehicle 2 abruptly stops to wait until pedestrians cross the pedestrian crosswalk D2, the vehicle 1 is guided along, for example, a path illustrated with an arrow PA and is decelerated and stopped. Note that since the inside of the traffic circle RA is set as a no-parking and no-stopping zone, the vehicle 1 is guided and stopped outside the traffic circle RA by the EM function.

In this case, override may be executed when the driver who is flustered by activation notification of the EM function or change in the traveling direction of the vehicle 1 performs an excessive driving operation. In a case of such excessive override, it is difficult for the driver to perform an appropriate collision avoidance operation through a manual driving operation, and there is a risk of inducing collision with surrounding structures or another vehicle in the traffic circle RA, deviation off the road, or the like.

For example, assume a case in which the MRM function is activated while the vehicle 1 is traveling in the circulatory roadway C of the traffic circle RA. In a case in which a serious defect occurs to the system when the vehicle 1 is at a position 1B and the MRM function is activated, the vehicle 1 is guided along, for example, a path illustrated with an arrow PB to the outside of the traffic circle RA from an exit E4 and stopped in a pull-off area such as the road shoulder of the road A4. In this case, override may be executed when an excessive driving operation is performed by the driver who is flustered by activation notification of the MRM function or change in the traveling direction of the vehicle 1. In a case of such excessive override, there is a risk of inducing collision with surrounding structures or another vehicle in the traffic circle RA, deviation off the road, or the like.

Thus, in the driving control apparatus according to the present embodiment, in order to execute the override function suitable for traveling in the traffic circle RA, a predetermined threshold value for activating the override function in a case in which the vehicle 1 is traveling inside the traffic circle RA, which differs in form from conventional intersections, is set to a value different from that for traveling outside the traffic circle RA. Specifically, in a case in which the EM function or the MRM function is activated during traveling inside the traffic circle RA, override due to an excessive driving operation by the driver is prevented by changing the override threshold value to a value greater than in normal operation outside the traffic circle RA.

Accordingly, the automated driving function, the EM function, or the MRM function is prevented from being overridden due to an excessive driving operation by the driver during traveling inside the traffic circle RA, and the automated driving function, the EM function, or the MRM function is continued by the autonomous operation device 10 even in a case in which the override function would have been executed outside the traffic circle RA due to the excessive driving operation by the driver. As a result, it is possible to avoid, for example, a situation of collision with surrounding structures or another vehicle in the traffic circle RA due to an excessive acceleration or deceleration operation or an excessive steering operation by the driver.

Setting of override threshold value

Setting of the override threshold value in the present embodiment will be described below. Note that the override threshold value, as a predetermined driving operation threshold value for determining whether to activate the override function, includes acceleration and deceleration override threshold values related to acceleration and deceleration operations and a steering override threshold value related to a steering operation. The acceleration and deceleration override threshold values include an acceleration override threshold value related to an acceleration operation and a brake override threshold value related to a brake operation.

1. Override threshold value outside traffic circle RA (normal operation)

During automated travel, acceleration override is executed in a case in which an engine torque command value due to an acceleration operation by the driver is greater than an engine torque command value for constant speed travel or inter-vehicular distance maintaining and following travel. In this case, the acceleration operation by the driver is prioritized to the automated driving function of the autonomous operation device 10. In normal operation, for example, an engine torque command value determined based on an engine torque map set according to vehicle speed and gear stage is set as an acceleration override threshold value OE0.

During automated travel, brake override is executed in a case in which an ESP hydraulic command value that causes deceleration in constant speed travel or inter-vehicular distance maintaining and following travel is provided due to a brake operation by the driver. In this case, the brake operation by the driver is prioritized to the automated driving function of the autonomous operation device 10. For example, an ESP hydraulic command value that causes deceleration equivalent to a speed of 2 km/h to a vehicle speed of constant speed travel or inter-vehicular distance maintaining and following travel or an ESP hydraulic command value that causes deceleration equivalent to 0.2 m/s$^2$ to an ACC set acceleration rate is set as a brake override threshold value OP0.

As a steering override threshold value OT0, a threshold value is set for additive steering (in the same direction) and a threshold value is set for subtractive steering (in the opposite direction). In a case of additive steering, for example, as the steering override threshold value OT0, a steering torque is set which corresponds to a steering angle with which a virtual lateral displacement y't for reaching to a virtual lateral position in t seconds is yt

+ $\alpha$ (where $\alpha$ is a constant determined based on vehicle speed). Note that a steering torque depending on the steering angle may be calculated based on a map of vehicle speed, steering angle, and steering torque.

In a case of subtractive steering, for example, as the steering override threshold value OT0, a steering torque is set, which is a value determined not to be minimal and is applied in the direction of decreasing a value (steering torque target value) obtained by converting, into steering torque, a steering angle with which a virtual lateral displacement y't for reaching a virtual lateral position in t seconds is yt + $\alpha$. Note that whether the value is minimal or not may be determined based on, for example, the steering angle or the steering angle speed.

2. Override threshold value inside traffic circle RA

During automated travel, an acceleration override threshold value OEd inside the traffic circle RA is set to a value greater than the above-described acceleration override threshold value OE0 outside the traffic circle RA. In other words, OEd > OE0 holds. During automated travel, a brake override threshold value OPd inside the traffic circle RA is set to a value greater than the above-described brake override threshold value OPd outside the traffic circle RA. In other words, OPd > OP0 holds.

During automated travel, a steering override threshold value OTd inside the traffic circle RA is set to a value greater than the above-described steering override threshold value OT0 outside the traffic circle RA. A steering override threshold value (outward steering override threshold value) OTdo is set for a steering operation in a direction toward the outside of the traffic circle RA (direction toward the outer periphery), and a steering override threshold value (inward steering override threshold value) OTdi is set for a steering operation in a direction toward the inside of the traffic circle RA (direction toward the inner periphery). In other words, OTdo > OT0 and Otdi > OT0 hold. Note that the outward steering override threshold value OTdo and the inward steering override threshold value OTdi may be equal values or different values. For example, the outward steering override threshold value OTdo may be set to a value greater than the inward steering override threshold value OTdi (OTdo > Otdi).

3. Override threshold value (outside-traffic circle threshold value) during MRM operation outside traffic circle RA

An acceleration override threshold value OEdmr during the MRM operation outside the traffic circle RA is set to a value greater than the above-described acceleration override threshold value OEd inside the traffic circle RA. In other words, OEdmr > OEd holds. A brake override threshold value OPdmr during the MRM operation outside the traffic circle RA is set to a value greater than the above-described brake override threshold value OPd outside the traffic circle RA. In other words, OPdmr > OPd holds.

A steering override threshold value (outward steering override threshold value and inward steering override threshold value) OTdmr during the MRM operation outside the traffic circle RA is set to a value greater than the above-described steering override threshold value OTd inside the traffic circle RA. In other words, OTdmr > OTd holds.

4. Override threshold value (outside-traffic circle threshold value) during the EM operation outside traffic circle RA

An acceleration override threshold value OEdem during the EM operation outside the traffic circle RA is set to a value greater than the above-described acceleration override threshold value OEdmr during the MRM operation outside the traffic circle RA. In other words, OEdem > OEdmr holds. A brake override threshold value OPdem during the EM operation outside the traffic circle RA is set to a value greater than the above-described brake override threshold value OPdmr during the MRM operation outside the traffic circle RA. In other words, OPdem > OPdmr holds.

A steering override threshold value (outward steering override threshold value and inward steering override threshold value) OTdem during the EM operation outside the traffic circle RA is set to a value greater than the above-described steering override threshold value OTdmr during the MRM operation outside the traffic circle RA. In other words, OTdem > OTdmr holds.

5. Override threshold value (inside-traffic circle threshold value) during MRM operation inside traffic circle RA

An acceleration override threshold value OEramr during the MRM operation inside the traffic circle RA is set to a value greater than the above-described acceleration override threshold value OEdmr during the MRM operation outside the traffic circle RA. In other words, OEramr > OEdmr holds. A brake override threshold value OPramr during the MRM operation inside the traffic circle RA is set to a value greater than the above-described brake override threshold value OPdmr during the MRM operation outside the traffic circle RA. In other words, OPramr > OPdmr holds.

A steering override threshold value OTramr during the MRM operation inside the traffic circle RA is set to a value greater than the above-described steering override threshold value OTdmr during the MRM operation outside the traffic circle RA. In addition, an outward steering override threshold value OTramro for a steering operation in the direction toward the outside of the traffic circle RA during the MRM operation is greater than an inward steering override threshold value OTramri for a steering operation in the direction toward the inside of the traffic circle RA during the MRM operation. In other words, OTramro > OTramri > OTdrm holds.

6. Override threshold value (inside-traffic circle threshold value) during EM operation in traffic circle RA

An acceleration override threshold value OEraem during the EM operation inside the traffic circle RA is set to a value greater than the above-described acceleration override threshold value OEdem during the EM operation outside the traffic circle RA. In other words, OEraem > OEdem holds. A brake override threshold value OPraem during the EM operation inside the traffic circle RA is set to a value greater than the above-described brake override threshold value OPdem during the EM operation outside the traffic circle RA. In other words, OPramr > OPdem holds.

A steering override threshold value OTraem during the EM operation inside the traffic circle RA is set to a value greater than the above-described steering override threshold value OTdem during the EM operation outside the traffic circle RA. In addition, an outward steering override threshold value OTraemo for a steering operation in the direction toward the outside of the traffic circle RA during the EM operation is greater than an inward steering override threshold value OTraemi for a steering operation in the direction toward the inside of the traffic circle RA during the EM operation. In other words, OTraemo > OTraemi > OTdem holds.

The relations among the above-described acceleration override threshold values, brake override threshold values, and steering override threshold values are summarized below.

- Acceleration override threshold values

$$OE0 < OEd < OEdmr < OEdem$$

$$OEdmr < OEramr$$

$$OEdem < OEraem$$

$$OEramr < OEraem$$

- Brake override threshold values

$$OP0 < OPd < OPdmr < OPdem$$

$$OPdmr < OPramr$$

$$OPdem < OPraem$$

$$OPramr < OPraem$$

- Steering override threshold values

$$OT0 < OTd < OTdmr < OTdem$$

$$OTdmr < OTramri < OTramro$$

$$OTdem < OTraemi < OTraemo$$

$$OTramri < OTraemi$$

$$OTramro < OTraemo$$

The override threshold value changing part 12 sets an acceleration override threshold value, a brake override threshold value, and a steering override threshold value to satisfy the above-described relations depending on the travel situation of the vehicle 1. An acceleration override threshold value inside the traffic circle RA, with respect to an acceleration override threshold value in normal operation (outside the traffic circle RA), may be set to, for example, an engine torque command value selected from the range of 120% to 250%, preferably, 150% to 220% of the acceleration override threshold value in normal operation. An acceleration override threshold value during the EM operation may be selected from, for example, the range of 120% to 250%, preferably, 150% to 220% of an acceleration override threshold value during the MRM operation.

A brake override threshold value inside the traffic circle RA, with respect to a brake override threshold value in normal operation (outside the traffic circle RA), may be set to, for example, an ESP hydraulic command selected from the range of 120% to 250%, preferably, 150% to 220% of the brake override threshold value in normal operation. A brake override threshold value during the EM operation may be selected from, for example, the range of 120% to 250%, preferably, 150% to 220% of a brake override threshold value during the MRM operation.

For example, in a case of a steering operation in the direction toward the inside of the traffic circle RA as additive steering during traveling in the circulatory roadway C, a steering override threshold value inside the traffic circle RA may be set to a value obtained by converting, into a steering torque, a steering angle calculated based on a virtual lateral displacement $y''t$ ($= yt + \beta$, where $\beta > \alpha$) and motion characteristics of the vehicle for the virtual lateral displacement $y't$ during traveling by the automated driving function. In a case of a steering operation in the direction toward the outside of the traffic circle RA as subtractive steering during traveling in the circulatory roadway C, the steering override threshold value may be set to a value obtained by converting, into a steering torque, a steering angle calculated based on a virtual lateral displacement $y''t$ ($= yt - \gamma$, where $\gamma$ is greater than a lateral displacement corresponding to a steering torque X' Nm) and motion characteristics of the vehicle for the virtual lateral displacement $y't$ during traveling by the automated driving function. A steering override threshold value during the EM operation may be selected from, for example, the range of 120% to 250%, preferably, 150% to 220% of a steering override threshold value during the MRM operation.

Operation process of EM function and MRM function during automated travel

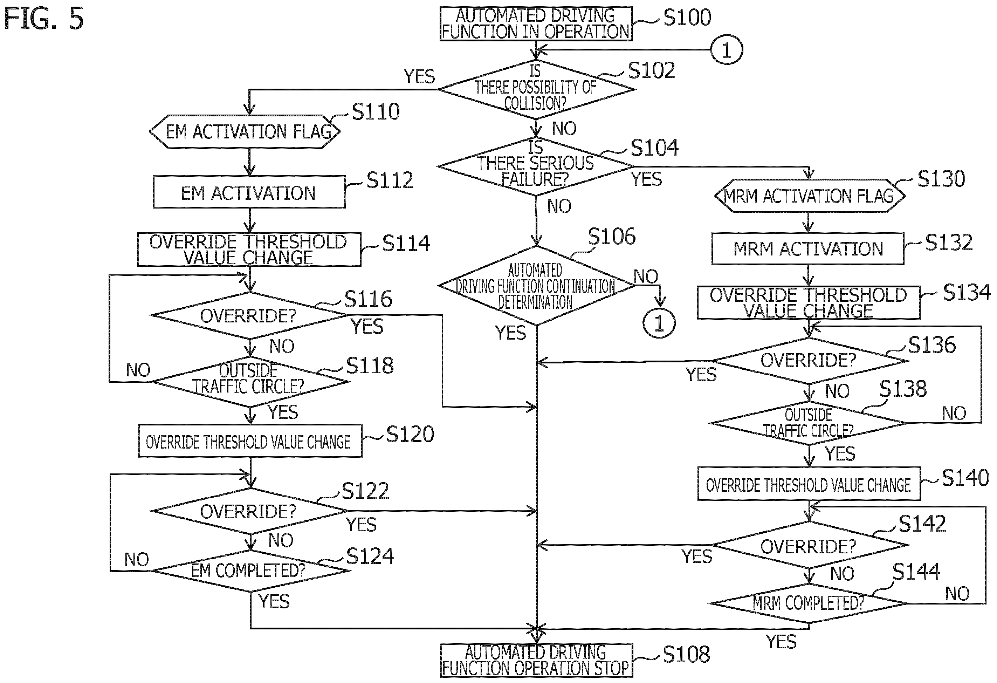

The following describes the process of control in a case in which the EM function or the MRM function is executed during automated travel. Figure 5 is a flowchart illustrating the process of control of the EM function and the MRM function according to the present embodiment. Note that, while the autonomous operation device 10 is configured to monitor the probability of collision with an obstacle in preparation for activation of the EM function and perform self-diagnosis of the system of the vehicle 1 in preparation for activation of the MRM function irrespective of whether the vehicle 1 is traveling inside the traffic circle RA or not, the following description will be made for a case in which the EM function or the MRM function is activated while the vehicle 1 is traveling inside the traffic circle RA by the automated driving function.

(1) Activation of automated driving function (step S100)

Automated travel by the autonomous operation device 10 is performed upon a start command from the driver of the vehicle 1 or the operator of a remote operation base station. The autonomous operation device 10 performs travel control of the vehicle 1 in accordance with a generated target path and a generated target vehicle speed. The autonomous operation device 10 understands that the vehicle 1 is traveling inside the traffic circle RA based on the own-vehicle position information, the map information, information related to the shape of the traffic circle RA, and the like acquired by the environmental condition estimating part 11.

(2) Determination of collision possibility (step S102)

As described above, the environmental condition estimating part 11 determines the possibility of collision with obstacles around the vehicle based on information of obstacles sensed by the external sensors 21 and vehicle information of the vehicle 1 sensed by the internal sensors 22.

For example, in a case in which the time to collision TTC to an obstacle on the target path of the vehicle 1 is equal to or less than a predetermined value, it is determined that the probability of collision with the obstacle is high, and the process proceeds to step S110 for transition to the EM function so as to execute the emergency avoidance control. In a case in which the time to collision TTC to the obstacle is greater than the predetermined value and it is determined that the probability of collision is low, the process proceeds to step S104.

(3) EM function

After the transition to the EM function, a flag is set for the EM operation (step S110), and operation of the EM function, including operation of autonomous emergency braking for collision avoidance or collision damage reduction, is started (step S112). The path generating part 13 determines a target stop position for stopping the vehicle 1 based on the position and speed of the vehicle 1 and the maximum deceleration for the emergency avoidance control, and generates an EM target path to the determined target stop position. The vehicle control part 14 activates a turn signal (not illustrated) in the direction of the target stop position and guides the vehicle 1 to the target stop position while decelerating the vehicle 1 at the maximum deceleration according to the EM target path.

(4) Override threshold value change (step S114)

The override threshold value changing part 12 changes the override threshold value from the override threshold values (OEd, OPd, OTdo, and OTdi) inside the traffic circle RA to the above-described override threshold values (OEraem, OPraem, OTraemo, and OTraemi) during the EM operation inside the traffic circle RA.

(5) Override determination (step S116)

The autonomous operation device 10 is configured to determine whether or not override is executed due to operational intervention by the driver during operation of the automated driving function, and the determination of override is continuously performed even after operation of the EM function is started. In a case in which the engine torque request due to the manual operation 35 of the acceleration pedal by the driver, the deceleration request due to the manual operation 36 of the brake pedal, or the steering torque due to the manual steering 34 is equal to or greater than the acceleration override threshold value, the brake override threshold value, or the steering override threshold value set at step S114, it is determined that override is executed and the process proceeds to step S108 to stop control by the autonomous operation device 10. In a case in which it is determined that no override is executed, the process proceeds to step S118.

(6) Determination of travelling in traffic circle RA (S118)

The autonomous operation device 10 determines whether the vehicle 1 is traveling outside the traffic circle RA or not based on the own-vehicle position information, the map information, and information related to the shape of the traffic circle RA that are acquired by the environmental condition estimating part 11. In a case in which it is determined that the vehicle 1 is traveling inside the traffic circle RA, the process returns to step S116 to continue traveling inside the traffic circle RA by the EM function. In a case in which it is determined that the vehicle 1 has exited the traffic circle RA and is outside the traffic circle RA, the process proceeds to step S120.

(7) Override threshold value change (step S120)

The override threshold value changing part 12 changes the override threshold value from the override threshold values (OEraem, OPraem, OTraemo, and OTraemi) during the EM operation inside the traffic circle RA to the override threshold values (OEdem, OPdem, and OTdem) during the EM operation outside the traffic circle RA.

(8) Override determination (step S122)

In a case in which the engine torque request due to the manual operation 35 of the acceleration pedal by the driver, the deceleration request due to the manual operation 36 of the brake pedal, or the steering torque due to the manual steering 34 is equal to or greater than the acceleration override threshold value, the brake override threshold value, or the steering override threshold value set at step S120, the autonomous operation device 10 determines that override is executed and the process proceeds to step S108 to stop control by the autonomous operation device 10. In a case in which it is determined that no override is executed, the process proceeds to step S124.

(9) EM completion determination (step S124)

The autonomous operation device 10 determines whether the emergency avoidance control by the EM function is completed or not based on the vehicle state and surrounding environment of the vehicle 1. Specifically, it is determined that EM is completed in a case in which the imminent risk of collision has been eliminated by emergency stop of the vehicle 1 or change in the surrounding environment or in a case in which the system is inactivated through an operation of a non-illustrated switch by the driver. In this case, the acceleration override threshold value, the brake override threshold value, and the steering override threshold value set at step S120 are reset to the override threshold values in normal operation, and hazard lights are flashed. In a case in which it is determined that EM is not completed, the process returns to step S122 to continue EM operation.

(10) Serious fault determination (step S104)

In a case in which it is determined that there is no probability of collision at step S102, the environmental condition estimating part 11 determines whether or not a serious fault has occurred to the vehicle 1 by the self-diagnosis function of the vehicle 1. In a case in which it is determined that a serious fault has occurred to the vehicle 1, the process proceeds to step S130 for transition to the MRM function. In a case in which it is determined that no serious fault has occurred, the process proceeds to step S106.

## (11) MRM function

After the transition to the MRM function, a flag is set for the MRM operation (step S130), and operation of the minimal risk maneuver (MRM) that decelerates and stops the vehicle in a lane or pulls the vehicle off to a road shoulder is started. The path generating part 13 determines a target stop position for stopping the vehicle 1 based on the position and speed of the vehicle 1 and a predetermined deceleration for MRM, and generates an MRM target path to the determined target stop position. The vehicle control part 14 guides the vehicle 1 to the target stop position while decelerating the vehicle 1 at the predetermined deceleration along the MRM target path. The hazard lights (not illustrated) are flashed during operation of the MRM function.

## (12) Override threshold value change (step S134)

The override threshold value changing part 12 changes the override threshold value from the override threshold values (OEd, OPd, OTdo, and OTdi) inside the traffic circle RA to the above-described override threshold values (OEramr, OPramr, OTramro, and OTramri) during the MRM operation inside the traffic circle RA.

## (13) Override determination (step S136)

The autonomous operation device 10 is configured to determine whether or not override is executed due to operational intervention by the driver during operation of the automated driving function, and the determination of override is continuously performed even after operation of the MRM function is started. In a case in which the engine torque request due to the manual operation 35 of the acceleration pedal by the driver, the deceleration request due to the manual operation 36 of the brake pedal, or the steering torque due to the manual steering 34 is equal to or greater than the acceleration override threshold value, the brake override threshold value, or the steering override threshold value set at step S134, it is determined that override is executed and the process proceeds to step S108 to stop control by the autonomous operation device 10. In a case in which it is determined that no override is executed, the process proceeds to step S138.

## (14) Determination of traveling in traffic circle RA (S138)

The autonomous operation device 10 determines whether or not the vehicle 1 is traveling outside the traffic circle RA based on the own-vehicle position information, the map information, information related to the shape of the traffic circle RA, and the like that are acquired by the environmental condition estimating part 11. In a case in which it is determined that the vehicle 1 is traveling inside the traffic circle RA, the process returns to step S136 to continue traveling inside the traffic circle RA by the MRM function. In a case in which it is determined that the vehicle 1 has exited the traffic circle RA and is outside the traffic circle RA, the process proceeds to step S140.

## (15) Override threshold value change (step S140)

The override threshold value changing part 12 changes the override threshold value from the override threshold values (OEramr, OPramr, OTramro, and OTramri) during the MRM operation inside the traffic circle RA to the override threshold values (OEdmr, OPdmr, and OTdmr) during the MRM operation outside the traffic circle RA.

## (16) Override determination (step S142)

In a case in which the engine torque request due to the manual operation 35 of the acceleration pedal by the driver, the deceleration request due to the manual operation 36 of the brake pedal, or the steering torque due to the manual steering 34 is equal to or greater than the acceleration override threshold value, the brake override threshold value, or the steering override threshold value set at step S140, the autonomous operation device 10 determines that override is executed and the process proceeds to step S108 to stop control by the autonomous operation device 10. In a case in which it is determined that no override is executed, the process proceeds to step S144.

## (17) MRM completion determination (step S144)

The autonomous operation device 10 determines whether or not control by the MRM function is completed based on the vehicle state and surrounding environment of the vehicle 1. Specifically, it is determined that MRM is completed in a case in which the vehicle 1 is guided and is stopped outside the traffic circle RA by the MRM function or in a case in which the system is inactivated through an operation of a non-illustrated switch by the driver. In this case, the acceleration override threshold value, the brake override threshold value, and the steering override threshold value set at step S140 are reset to the override threshold values in normal operation. In a case in which it is determined that MRM is not completed, the process returns to step S142 to continue MRM operation.

(18) Automated driving function continuation determination (S106)

In a case in which it is determined that no serious fault has occurred to the vehicle 1 at step S104, the autonomous operation device 10 determines whether or not to continue the automated driving function of the vehicle 1. Specifically, it is determined whether or not conditions of the travel state and surrounding environment of the vehicle 1 acquired by the environmental condition estimating part 11 are maintained in the operational design domain (ODD) of the system. For example, it is determined that the conditions are out of the ODD in a case in which strong wind is blowing at a speed exceeding an allowable value. In addition, through the self-diagnosis function, it is determined whether or not another fault or anomaly different from the above-described serious fault has occurred to the vehicle 1. For example, it is determined that another fault or anomaly has occurred in a case in which the external sensors 21 have failed. In a case in which it is determined that there is deviation from ODD or another fault or anomaly, or in a case in which the system is inactivated through an operation of a non-illustrated switch by the driver, the process proceeds to step S108 to stop the automated driving function. In a case in which it is determined that the ODD is maintained and no other fault nor anomaly has occurred, the process returns to step S102 to continue the automated driving function.

(19) Automated driving function operation stop (S108)

In a case in which it is determined that override is executed due to operational intervention by the driver at step S116, S122, S136, or S142, in a case in which it is determined that EM is completed at step S124, in a case in which it is determined that MRM is completed at step S144, or in a case in which it is determined that the automated driving function is to be stopped at step S106, the automated driving function of the autonomous operation device 10 is stopped to transfer to a manual operation mode.

With the driving control apparatus for the vehicle 1 according to the first embodiment described above, the following operational effects are achieved.

(1) The driving control apparatus for the vehicle including the autonomous operation device 10 for executing the automated driving function has: the MRM function to execute the minimal risk maneuver in a case in which a system fault has occurred during operation of the automated driving function, the minimal risk maneuver including decelerating and stopping the vehicle 1 in a lane; the EM function to execute emergency avoidance control that includes activation of an emergency brake in a case in which collision with an obstacle existing around the vehicle 1 is expected during operation of the automated driving function; and the override function to stop any function in operation and transfer authority to the driver in a case in which the driver has performed operational intervention equal to or greater than a predetermined threshold value during operation of the automated driving function, the MRM function, or the EM function. The override function is configured to set the predetermined threshold value for activating the override function to different values depending on whether the vehicle 1 is travelling inside or outside the traffic circle RA.

The traffic circle RA has a risk of crossing with another traffic participant like conventional intersections such as crossroads and T-junctions, but differs in form from the conventional intersections such as crossroads and T-junctions, and thus it is desired to execute the override function suitable for traveling in the traffic circle RA. For example, since no road shoulders nor road side strips are provided on the outer periphery side in the traffic circle RA, excessive override may potentially cause contact and collision between the vehicle 1 and surrounding structures outside the traffic circle RA, such as guardrails. Furthermore, the behavior of the vehicle 1 may become unstable when the vehicle 1 drives over a step of the apron F on the inner side in the traffic circle RA due to excessive override. Thus, the override threshold value for determining whether or not to override the automated driving function, the MRM function, or the EM function is set to different values depending on whether the vehicle 1 is traveling inside or outside the traffic circle RA, and accordingly, the override threshold value suitable for traveling in the traffic circle RA can be set.

(2) The override function is configured to set the predetermined threshold value to the outside-traffic circle threshold value during operation of the MRM function or the EM function outside the traffic circle RA and to set the predetermined threshold value to the inside-traffic circle threshold value during operation of the MRM function or the EM function inside the traffic circle, and the inside-traffic circle threshold value is greater than the outside-traffic circle threshold value.

Typically, the inside of the traffic circle RA is set as a no-parking and no-stopping zone, and thus the vehicle 1 needs to be safely evacuated to the outside of the traffic circle RA when the MRM function or the EM function is activated in the traffic circle RA. However, for example, when override is executed upon an excessive driving operation by the driver flustered by change of the traveling direction of the vehicle 1 due to activation of the MRM function or the EM function, contact and collision may potentially occur between the vehicle 1 and surrounding structures or other traffic participants in the traffic circle RA. Furthermore, in such an emergency situation that the MRM function or the EM function is activated, it is extremely difficult for the driver to perform an appropriate driving operation in the traffic circle RA in which no parking nor stopping is permitted. Thus, the inside-traffic circle threshold value is set to be greater than the outside-traffic circle threshold value so that the override function is hard to be executed inside the traffic circle RA, and accordingly, the MRM function or the EM function can be continued by the autonomous operation device 10 to securely avoid an emergency situation.

(3) The override function includes, as the predetermined threshold value, a steering override threshold value for activating the override function in a case in which the driver has performed steering intervention during operation of the MRM function or the EM function. The steering override threshold value includes an outward steering override threshold value (OTramro, OTraemo) in a case in which steering is performed toward the outside of the traffic circle RA in the traffic circle RA and an inward steering override threshold value (OTramri, OTraemi) in a case in which steering is performed toward the inside of traffic circle in the traffic circle RA, and the outward steering override threshold value (OTramro, OTraemo) is greater than the inward steering override threshold value (OTramri, OTraemi).

As described above, no road side strips nor road shoulders are provided on the outer periphery side in the traffic circle RA, and the distance between the vehicle 1 traveling in the circulatory roadway C and a surrounding structure such as a guardrail is close. Thus, the outward steering override threshold value (OTramro, OTraemo) is set to be greater than the inward steering override threshold value (OTramri, OTraemi) so that the MRM function or the EM function is unlikely to be overridden by a steering operation in a direction toward the outer periphery of the traffic circle RA. Accordingly, it is possible to prevent contact and collision between the vehicle 1 and surrounding structures outside the traffic circle RA and to securely evacuate the vehicle 1 by the MRM function or the EM function of the autonomous operation device 10.

(4) The override function is configured to change the inside-traffic circle threshold value during operation of the MRM function or the EM function to the outside-traffic circle threshold value during operation of the MRM function or the EM function when the MRM function or the EM function is activated in the traffic circle RA and then, the vehicle 1 is moved out of the traffic circle RA by the MRM function or the EM function. Accordingly, it is possible to set the override threshold value suitable for the travel situation of the vehicle 1.

Second Embodiment

A driving control apparatus for a vehicle according to a second embodiment of the present invention will be described below. The driving control apparatus for a vehicle according to the second embodiment has the same basic configuration as in the above-described first embodiment. The following description will be mainly made on difference from the first embodiment.

In the present embodiment, the override threshold value is set in more detail depending on the structure of the traffic circle RA.

(1) Apron structure

As illustrated in Figure 4, the apron F is provided between the central island B and the circulatory roadway C of the traffic circle RA. The apron F is a part that a large-sized vehicle such as a semi-trailer or articulated truck, which has difficulty traveling within the width of the circulatory roadway C is permitted to partially drive over and travel on. For example, a step or rumble strips are provided at a boundary part between the circulatory roadway C and the apron F to distinguish the circulatory roadway C and the apron F. A rumble strip is successively arranged recessed parts formed on the pavement surface of a road. Alternatively, depending on the traffic circle RA, diagonal lines or other markings are marked on the road to visually distinguish the circulatory roadway C and the apron F. As explained above, the apron F of the traffic circle RA has various kinds of structures.

When the EM function or the MRM function is overridden upon a steering operation by the driver in the direction toward the inside of the traffic circle RA (inner periphery direction) while the EM function or the MRM function is operated during traveling inside the traffic circle RA, the vehicle 1 moves in a direction approaching the central island B of the traffic circle RA. In a case in which the apron F has a structure with a step or level difference in this situation, there is a possibility that the vehicle 1 drives over the step and the behavior of the vehicle 1 becomes unstable.

Thus, in the present embodiment, the inward steering override threshold value during traveling inside the traffic circle RA is changed according to the apron structure of the traffic circle RA. Specifically, the inward steering override threshold value in a case in which a step exists between the apron F and the circulatory roadway C of the traffic circle RA is set to a value greater than the inward steering override threshold value in a case in which no step exists.

Specifically, as for the inward steering override threshold value OTraemi for a steering operation in the direction toward the inside of the traffic circle RA during the EM operation, an inward steering override threshold value OTraemi_1 in a case in which a step is present between the apron F and the circulatory roadway C is set to a value greater than an inward steering override threshold value OTraemi_0 in a case in which no step is present. In addition, as for the inward steering override threshold value OTramri for a steering operation in the direction toward the inside of the traffic circle RA during the MRM operation, an inward steering override threshold value OTramri_1 in a case in which a step is present between the apron F and the circulatory roadway C is set to a value greater than an inward steering override threshold value OTramri_0 in a case in which no step is present.

Accordingly, in a case in which a step exists between the apron F and the circulatory roadway C of the traffic circle RA, the EM function or the MRM function is hard to be overridden upon a steering operation in the direction toward the inside of the traffic circle RA. As a result, it is possible to prevent unstable behavior of the vehicle 1 such as driving over the level difference between the apron F and the circulatory roadway C due to an excessive steering operation by the driver.

Note that the structure of the apron F of the traffic circle RA can be determined based on, for example, information related to the shape of the traffic circle RA and acquired from the map information database 23 or image data acquired from the external sensors 21.

(2) Existence of pedestrian crosswalk

As illustrated in Figure 4, a pedestrian crosswalk is installed on a road extending from an exit of the traffic circle RA in some cases. For example, in a case in which the pedestrian crosswalk D4 is installed on the road A4 as illustrated in Figure 4, pedestrians crossing the pedestrian crosswalk D4 may potentially exist. Thus, the outward steering override threshold value is increased and is changed to a greater value in a case in which the vehicle 1 is approaching an exit of the traffic circle RA and a pedestrian crosswalk is installed just beyond the exit.

Specifically, for example, in a case in which the vehicle 1 is approaching the exit E4 at which the pedestrian crosswalk D4 is installed, the outward steering override threshold value for a steering operation in the direction toward the outside of the traffic circle RA during the EM operation is changed to a value OTraemo_1 greater than the above-described outward steering override threshold value OTraemo for a steering operation in the direction toward the outside of the traffic circle RA during the EM operation. For example, in a case in which the vehicle 1 is approaching the exit E3 of the traffic circle RA, the outward steering override threshold value during the EM operation is changed to a value OTraemo_0 less than the above-described outward steering override threshold value OTraemo during the EM operation since no pedestrian crosswalk is installed just beyond the exit E3. The outward steering override threshold value OTraemo_0 after change is equal to or greater than the override threshold value OTraemi for steering toward the inside of the traffic circle RA during the EM operation. In other words, $OTraemo\_1 > OTraemo > OTraemo\_0 \geq OTraemi$ holds.

For example, in a case in which the vehicle 1 is approaching the exit E4 at which the pedestrian crosswalk D4 is installed, the outward steering override threshold value for a steering operation in the direction toward the outside of the traffic circle RA during the MRM operation is changed to a value OTramro_1 greater than the above-described outward steering override threshold value OTramro for a steering operation in the direction toward the outside of the traffic circle RA during the MRM operation. For example, in a case in which the vehicle 1 is approaching the exit E3 of the traffic circle RA, the outward steering override threshold value for a steering operation in the direction toward the outside of the traffic circle RA during the MRM operation is changed to a value OTramro_0 less than the above-described outward steering override threshold value OTramro for a steering operation in the direction toward the outside of the traffic circle RA during the MRM operation since no pedestrian crosswalk is installed just beyond the exit E3. The outward steering override threshold value OTramro_0 after change is equal to or greater than the inward steering override threshold value OTramri for steering toward the inside of the traffic circle RA during the MRM operation. In other words, $OTramro\_1 > OTramro > OTramro\_0 \geq OTramri$ holds.

Accordingly, in a case in which a pedestrian crosswalk is installed just beyond an exit of the traffic circle RA, the EM function or the MRM function is hard to be overridden upon a steering operation in the direction toward the outside of the traffic circle RA. As a result, the MRM function or the EM function of the autonomous operation device 10 can be continued to avoid contact and collision with crossing pedestrians.

Since no surrounding structures such as guardrails are installed at exits of the traffic circle RA, the vehicle 1 is unlikely to contact and collide with surrounding structures even when the override function is activated upon a steering operation in the direction toward the outside of the traffic circle RA. Accordingly, the risk of contact and collision with crossing pedestrians is low in a case in which no pedestrian crosswalk is installed just beyond an exit, and thus a driving operation intention of the driver can be prioritized by decreasing the outward steering override threshold value for a steering operation in the direction toward the outside of the traffic circle RA.

Note that whether or not a pedestrian crosswalk is installed on a road connected to the traffic circle RA can be determined based on, for example, information related to the traffic circle RA and acquired from the map information database 23 or image data acquired from the external sensors 21.

Modifications

(1) In the above-described embodiments, whether or not the vehicle 1 is traveling inside the traffic circle RA is determined based on the own-vehicle position information, the map information, information related to the shape of the traffic circle RA, and the like that are acquired by the environmental condition estimating part 11. However, for example, in a case in which a fault has occurred to the position detecting part for detecting the current position of the vehicle 1, which is constituted by the camera 212 included in the external sensors 21 or the positioning means 24 such as GNSS, it may be unable to accurately determine whether or not the vehicle 1 is traveling inside the traffic circle RA. In this case, whether the vehicle 1 is inside the traffic circle RA or not can be determined, taking into account such a form of the traffic circle RA that steering needs to be performed in the direction toward the outside of the traffic circle RA to exit the traffic circle RA.

In a left-side driving case as illustrated in Figure 4, the vehicle 1 circulates clockwise in the circulatory roadway C, and when exiting the traffic circle RA, the vehicle 1 performs left steering and exits from an exit. In other words, the vehicle 1 performs right steering while circulating in the circulatory roadway C, and the vehicle 1 performs steering in a direction different from that of right steering for circulation when exiting the traffic circle RA. Thus, it can be determined that the vehicle 1 has moved out of the traffic circle RA in a case in which the steering angle of the vehicle 1 is continuously controlled for a predetermined time or longer in a direction different from a steering direction for the vehicle 1 to travel along the circulatory roadway C of the traffic circle RA. The steering angle of the vehicle 1 can be detected by, for example, the internal sensors 22.

The override threshold value changing part 12 is configured to change the override threshold value from the inside-traffic circle threshold value to the outside-traffic circle threshold value in a case in which it is determined that the vehicle 1 has moved out of the traffic circle RA as described above.

(2) In the above-described embodiments, the vehicle 1 is guided to the outside of the traffic circle RA and decelerated and stopped in a case in which the EM function is activated. However, the present invention is not limited thereto, and the vehicle 1 may be stopped inside the traffic circle RA depending on the shape of the traffic circle RA or a situation during operation of the EM function.

(3) In the above-described embodiments, description is made on an example in which the autonomous operation device 10 has the EM function and the MRM function. However, the present invention is not limited thereto, and the override threshold value can be set as described above also in a case in which the autonomous operation device 10 has one of the EM function and the MRM function.

Although the embodiments of the present invention are described above, the present invention is not limited to the above-described embodiments, but further various modifications and changes are possible within the scope of the present invention as defined in the appended claims.

[Reference Signs List]

1     Vehicle
10   Autonomous operation device
11   Environmental condition estimating part
12   Override threshold value changing part
13   Path generating part
14   Vehicle control part
15   ACC controller
16   Automated steering controller
21   External sensors
22   Internal sensors
23   Map information database
24   Positioning means (GNSS)
31   EPS controller
32   Engine controller
33   ESP/ABS controller
34   Manual steering (steering wheel)
35   Manual operation (acceleration pedal)
36   Manual operation (brake pedal)

**Claims**

1. A driving control apparatus for a vehicle (1) including an autonomous operation device (10) for executing an automated driving function, the driving control apparatus having:

   an MRM function to execute a minimal risk maneuver in a case in which a system fault has occurred during operation of the automated driving function, the minimal risk maneuver including decelerating and stopping the vehicle (1) in a lane;
   an EM function to execute emergency avoidance control that includes activation of an emergency brake in a case in which collision with an obstacle existing around the vehicle (1) is expected during operation of the automated driving function; and
   an override function to stop any function in operation and transfer authority to a driver in a case in which the driver has performed operational intervention equal to or greater than a predetermined threshold value during operation of the automated driving function, the MRM function, or the EM function,
   **characterized in that**
   the override function is configured to set the predetermined threshold value for activating the override function to different values depending on whether the vehicle (1) is traveling inside or outside a traffic circle (RA).

2. The driving control apparatus for the vehicle (1) according to claim 1, wherein:

the override function is configured to set the predetermined threshold value to an outside-traffic circle threshold value during operation of the MRM function or the EM function outside the traffic circle (RA) and to set the predetermined threshold value to an inside-traffic circle threshold value during operation of the MRM function or the EM function inside the traffic circle (RA); and
the inside-traffic circle threshold value is greater than the outside-traffic circle threshold value.

3. The driving control apparatus for the vehicle (1) according to claim 2, wherein:

the override function includes, as the predetermined threshold value, a steering override threshold value for activating the override function in a case in which the driver has performed steering intervention during operation of the MRM function or the EM function; and
the steering override threshold value includes an outward steering override threshold value (OTramro, OTraemo) in a case in which steering is performed toward outside of the traffic circle (RA) in the traffic circle (RA) and an inward steering override threshold value (OTramri, OTraemi) in a case in which steering is performed toward inside of the traffic circle (RA) in the traffic circle (RA), and the outward steering override threshold value (OTramro, OTraemo) is greater than the inward steering override threshold value (OTramri, OTraemi).

4. The driving control apparatus for the vehicle (1) according to claim 3, wherein:

the override function is configured to change the inward steering override threshold value in the traffic circle (RA) according to an apron structure of the traffic circle; and
the inward steering override threshold value (OTraemi_1) in a case in which a level difference exists between an apron (F) and a circulatory roadway (C) of the traffic circle (RA) is set to a value greater than the inward steering override threshold value (OTraemi_0) in a case in which no level difference exists.

5. The driving control apparatus for the vehicle (1) according to claim 3, wherein the override function is configured to change the outward steering override threshold value to a greater value in a case in which the vehicle (1) is approaching an exit of the traffic circle (RA) and a pedestrian crosswalk is installed just beyond the exit of the traffic circle.

6. The driving control apparatus for the vehicle (1) according to claim 3, wherein the override function is configured to change the outward steering override threshold value to a smaller value in a case in which the vehicle (1) is approaching an exit of the traffic circle (RA) and no pedestrian crosswalk is installed just beyond the exit, and the changed outward steering override threshold value is equal to or greater than the inward steering override threshold value.

7. The driving control apparatus for the vehicle (1) according to any one of claims 2 to 6, wherein the override function is configured to change the inside-traffic circle threshold value during operation of the MRM function or the EM function to the outside-traffic circle threshold value during operation of the MRM function or the EM function when the MRM function or the EM function is activated in the traffic circle (RA) and then the vehicle (1) is moved out of the traffic circle (RA) by the MRM function or the EM function.

8. The driving control apparatus for the vehicle (1) according to claim 7, wherein the override function is configured to determine that the vehicle (1) has moved out of the traffic circle (RA) and to change the inside-traffic circle threshold value to the outside-traffic circle threshold value when the steering angle of the vehicle (1) is continuously controlled for a predetermined time or greater in a direction different from a steering direction with which the vehicle (1) travels along a circulatory roadway (C) of the traffic circle (RA) in a case in which a fault has occurred to a position detecting part for detecting a current position of the vehicle (1) while the MRM function or the EM function is operated in the traffic circle (RA).

**Patentansprüche**

1. Fahrsteuerungsvorrichtung für ein Fahrzeug (1), umfassend eine Autonomer-Betrieb-Vorrichtung (10) zum Ausführen einer Automatisiertes-Fahren-Funktion, wobei die Fahrsteuerungsvorrichtung aufweist:

eine MRM-Funktion zum Ausführen eines Manövers mit minimalem Risiko in einem Fall, in welchem während eines Betriebs der Automatisiertes-Fahren-Funktion ein Systemfehler aufgetreten ist, wobei das Manöver mit minimalem Risiko ein Verzögern und Stoppen des Fahrzeugs (1) in einer Fahrspur umfasst;
eine EM-Funktion zum Ausführen einer Notfallvermeidungssteuerung, welche eine Aktivierung einer Notbremse in einem Fall umfasst, in welchem während eines Betriebs der Automatisiertes-Fahren-Funktion eine Kollision mit einem Hindernis erwartet wird, welches in einem Umfeld des Fahrzeugs (1) vorhanden ist; und eine Override-Funktion zum Stoppen jeglicher in Betrieb befindlichen Funktion und Übertragen einer Autorität auf einen Fahrer in einem Fall, in welchem der Fahrer während eines Betriebs der Automatisiertes-Fahren-Funktion, der MRM-Funktion oder der EM-Funktion einen Bedieneingriff durchgeführt hat, welcher gleich oder größer als ein vorbestimmter Schwellenwert ist, **dadurch gekennzeichnet, dass** die Override-Funktion dazu eingerichtet ist, den vorbestimmten Schwellenwert zum Aktivieren der Override-Funktion in Abhängigkeit davon auf unterschiedliche Werte einzustellen, ob das Fahrzeug (1) innerhalb oder außerhalb eines Kreisverkehrs (RA) fährt.

2. Fahrsteuerungsvorrichtung für das Fahrzeug (1) nach Anspruch 1, wobei:

    die Override-Funktion dazu eingerichtet ist, den vorbestimmten Schwellenwert während eines Betriebs der MRM-Funktion oder der EM-Funktion außerhalb des Kreisverkehrs (RA) auf einen Kreisverkehr-Außerhalb-Schwellenwert einzustellen und den vorbestimmten Schwellenwert während eines Betriebs der MRM-Funktion oder der EM-Funktion innerhalb des Kreisverkehrs (RA) auf einen Kreisverkehr-Innerhalb-Schwellenwert einzustellen; und
    der Kreisverkehr-Innerhalb-Schwellenwert größer ist als der Kreisverkehr-Außerhalb-Schwellenwert.

3. Fahrsteuerungsvorrichtung für das Fahrzeug (1) nach Anspruch 2, wobei:

    die Override-Funktion als den vorbestimmten Schwellenwert einen Lenk-Override-Schwellenwert zum Aktivieren der Override-Funktion in einem Fall umfasst, in welchem der Fahrer während eines Betriebs der MRM-Funktion oder der EM-Funktion einen Lenkeingriff durchgeführt hat; und
    der Lenk-Override-Schwellenwert einen Lenk-Override-Schwellenwert nach außen (OTramro, OTraemo) in einem Fall, in welchem in dem Kreisverkehr (RA) ein Lenken in Richtung der Außenseite des Kreisverkehrs (RA) durchgeführt wird, und einen Lenk-Override-Schwellenwert nach innen (OTramri, OTraemi) in einem Fall umfasst, in welchem in dem Kreisverkehr (RA) ein Lenken in Richtung der Innenseite des Kreisverkehrs (RA) durchgeführt wird, und der Lenk-Override-Schwellenwert nach außen (OTramro, OTraemo) größer ist als der Lenk-Override-Schwellenwert nach innen (OTramri, OTraemi).

4. Fahrsteuerungsvorrichtung für das Fahrzeug (1) nach Anspruch 3, wobei:

    die Override-Funktion dazu eingerichtet ist, den Lenk-Override-Schwellenwert nach innen in dem Kreisverkehr (RA) gemäß einer Apron-Struktur des Kreisverkehrs zu ändern; und der Lenk-Override-Schwellenwert nach innen (OTraemi_1) in einem Fall, in welchem ein Niveauunterschied zwischen einem Apron (F) und einer Kreisfahrbahn (C) des Kreisverkehrs (RA) besteht, auf einen Wert eingestellt wird, welcher größer ist als der Lenk-Override-Schwellenwert nach innen (OTraemi_0) in einem Fall, in welchem kein Niveauunterschied besteht.

5. Fahrsteuerungsvorrichtung für das Fahrzeug (1) nach Anspruch 3, wobei die Override-Funktion dazu eingerichtet ist, den Lenk-Override-Schwellenwert nach außen auf einen größeren Wert zu ändern, in einem Fall, in welchem sich das Fahrzeug (1) einer Ausfahrt des Kreisverkehrs (RA) nähert und unmittelbar hinter der Ausfahrt des Kreisverkehrs ein Fußgängerüberweg eingerichtet ist.

6. Fahrsteuerungsvorrichtung für das Fahrzeug (1) nach Anspruch 3, wobei die Override-Funktion dazu eingerichtet ist, den Lenk-Override-Schwellenwert nach außen auf einen kleineren Wert zu ändern, in einem Fall, in welchem sich das Fahrzeug (1) einer Ausfahrt des Kreisverkehrs (RA) nähert und unmittelbar hinter der Ausfahrt kein Fußgängerüberweg eingerichtet ist, und der geänderte Lenk-Override-Schwellenwert nach außen gleich oder größer ist als der Lenk-Override-Schwellenwert nach innen.

7. Fahrsteuerungsvorrichtung für das Fahrzeug (1) nach einem der Ansprüche 2 bis 6, wobei die Override-Funktion dazu eingerichtet ist, den Kreisverkehr-Innerhalb-Schwellenwert während eines Betriebs der MRM-Funktion oder der EM-Funktion in den Kreisverkehr-Außerhalb-Schwellenwert während eines Betriebs der MRM-Funktion oder der EM-Funktion zu ändern, wenn die MRM-Funktion oder die EM-Funktion in dem Kreisverkehr (RA) aktiviert wird und das Fahrzeug (1) anschließend durch die MRM-Funktion oder die EM-Funktion aus dem Kreisverkehr (RA) herausbewegt wird.

8. Fahrsteuerungsvorrichtung für das Fahrzeug (1) nach Anspruch 7, wobei die Override-Funktion dazu eingerichtet ist, zu bestimmen, dass das Fahrzeug (1) aus dem Kreisverkehr (RA) herausbewegt worden ist, und den Kreisverkehr-Innerhalb-Schwellenwert in den Kreisverkehr-Außerhalb-Schwellenwert zu ändern, wenn der Lenkwinkel des Fahrzeugs (1) für eine vorbestimmte Zeitdauer oder länger kontinuierlich in eine Richtung gesteuert wird, welche sich von einer Lenkrichtung unterscheidet, mit welcher das Fahrzeug (1) entlang einer Kreisfahrbahn (C) des Kreisverkehrs (RA) fährt, in einem Fall, in welchem ein Fehler an einem Positionsdetektionsteil zum Detektieren einer aktuellen Position des Fahrzeugs (1) aufgetreten ist, während die MRM-Funktion oder die EM-Funktion in dem Kreisverkehr (RA) betrieben wird.

## Revendications

1. Appareil de commande de conduite pour un véhicule (1) comportant un dispositif de fonctionnement autonome (10) pour exécuter une fonction de conduite automatisée, l'appareil de commande de conduite présentant :

   une fonction MRM destinée à exécuter une manœuvre à risque minimal dans un cas où une défaillance de système s'est produite pendant le fonctionnement de la fonction de conduite automatisée, la manœuvre à risque minimal comportant la décélération et l'arrêt du véhicule (1) dans une voie ;
   une fonction EM destinée à exécuter une commande d'évitement d'urgence qui comporte l'activation d'un frein d'urgence dans le cas où une collision avec un obstacle existant autour du véhicule (1) est attendue pendant le fonctionnement de la fonction de conduite automatisée ; et
   une fonction de prise de contrôle manuelle destinée à arrêter toute fonction en cours de fonctionnement et à transférer le contrôle à un conducteur dans un cas où le conducteur a réalisé une intervention opérationnelle égale ou supérieure à une valeur seuil prédéterminée pendant le fonctionnement de la fonction de conduite automatisée, de la fonction MRM ou de la fonction EM,
   **caractérisé en ce que**
   la fonction de prise de contrôle manuelle est configurée pour régler la valeur seuil prédéterminée pour l'activation de la fonction de prise de contrôle manuelle sur différentes valeurs selon que le véhicule (1) se déplace à l'intérieur ou à l'extérieur d'un carrefour giratoire (RA).

2. Appareil de commande de conduite pour le véhicule (1) selon la revendication 1, dans lequel :

   la fonction de prise de contrôle manuelle est configurée pour régler la valeur seuil prédéterminée sur une valeur seuil d'extérieur de carrefour giratoire pendant le fonctionnement de la fonction MRM ou de la fonction EM à l'extérieur du carrefour giratoire (RA) et pour régler la valeur seuil prédéterminée sur une valeur seuil d'intérieur de carrefour giratoire pendant le fonctionnement de la fonction MRM ou de la fonction EM à l'intérieur du carrefour giratoire (RA) ; et
   la valeur seuil d'intérieur de carrefour giratoire est supérieure à la valeur seuil d'extérieur de carrefour giratoire.

3. Appareil de commande de conduite pour le véhicule (1) selon la revendication 2, dans lequel :

   la fonction de prise de contrôle manuelle comporte, en tant que valeur seuil prédéterminée, une valeur seuil de prise de contrôle manuelle de braquage pour activer la fonction de prise de contrôle manuelle dans un cas où le conducteur a réalisé une intervention de braquage pendant le fonctionnement de la fonction MRM ou de la fonction EM ; et
   la valeur seuil de prise de contrôle manuelle de braquage comporte une valeur seuil de prise de contrôle manuelle de braquage vers l'extérieur (OTramro, OTraemo) dans un cas où le braquage est réalisé vers l'extérieur du carrefour giratoire (RA) dans le carrefour giratoire (RA) et une valeur seuil de prise de contrôle manuelle de braquage vers l'intérieur (OTramri, OTraemi) dans un cas où le braquage est réalisé vers l'intérieur du carrefour giratoire (RA) dans le carrefour giratoire (RA), et la valeur seuil de prise de contrôle manuelle de braquage vers l'extérieur (OTramro, OTraemo) est supérieure à la valeur seuil de prise de contrôle manuelle de braquage vers l'intérieur (OTramri, OTraemi).

4. Appareil de commande de conduite pour le véhicule (1) selon la revendication 3, dans lequel :

   la fonction de prise de contrôle manuelle est configurée pour modifier la valeur seuil de prise de contrôle manuelle de braquage vers l'intérieur dans le carrefour giratoire (RA) selon une structure de tablier du carrefour giratoire ; et
   la valeur seuil de prise de contrôle manuelle de braquage vers l'intérieur (OTraemi_1) dans un cas où il existe une différence de niveau entre un tablier (F) et une voie de circulation (C) du carrefour giratoire (RA) est réglée sur une valeur supérieure à la valeur seuil de prise de contrôle manuelle de braquage vers l'intérieur (OTraemi_0) dans un cas où il n'existe pas de différence de niveau.

**5.** Appareil de commande de conduite pour le véhicule (1) selon la revendication 3, dans lequel la fonction de prise de contrôle manuelle est configurée pour faire passer la valeur seuil de prise de contrôle manuelle de braquage vers l'extérieur à une valeur supérieure dans un cas où le véhicule (1) s'approche d'une sortie du carrefour giratoire (RA) et qu'un passage piéton est installé juste après la sortie du carrefour giratoire.

**6.** Appareil de commande de conduite pour le véhicule (1) selon la revendication 3, dans lequel la fonction de prise de contrôle manuelle est configurée pour faire passer la valeur seuil de prise de contrôle manuelle de braquage vers l'extérieur à une valeur inférieure dans un cas où le véhicule (1) s'approche d'une sortie du carrefour giratoire (RA) et qu'aucun passage piéton n'est installé juste après la sortie, et la valeur seuil de prise de contrôle manuelle de braquage vers l'extérieur modifiée est supérieure ou égale à la valeur seuil de prise de contrôle manuelle de braquage vers l'intérieur.

**7.** Appareil de commande de conduite pour le véhicule (1) selon l'une quelconque des revendications 2 à 6, dans lequel la fonction de prise de contrôle manuelle est configurée pour faire passer la valeur seuil d'intérieur de carrefour giratoire pendant le fonctionnement de la fonction MRM ou de la fonction EM à la valeur seuil d'extérieur de carrefour giratoire pendant le fonctionnement de la fonction MRM ou de la fonction EM lorsque la fonction MRM ou la fonction EM est activée dans le carrefour giratoire (RA) et qu'ensuite le véhicule (1) sort du carrefour giratoire (RA) au moyen de la fonction MRM ou de la fonction EM.

**8.** Appareil de commande de conduite pour le véhicule (1) selon la revendication 7, dans lequel la fonction de prise de contrôle manuelle est configurée pour déterminer que le véhicule (1) est sorti du carrefour giratoire (RA) et pour faire passer la valeur seuil d'intérieur de carrefour giratoire à la valeur seuil d'extérieur de carrefour giratoire lorsque l'angle de braquage du véhicule (1) est commandé en continu pendant une durée prédéterminée ou plus dans une direction différente d'une direction de braquage avec laquelle le véhicule (1) se déplace le long d'une voie de circulation (C) du carrefour giratoire (RA) dans le cas où un défaut s'est produit sur une partie de détection de position pour détecter une position actuelle du véhicule (1) pendant le fonctionnement de la fonction MRM ou de la fonction EM dans le carrefour giratoire (RA).

# FIG. 1

# FIG. 2

REAR LATERAL
DETECTION
(LIDAR) — 215

FRONT LATERAL
DETECTION
(LIDAR) — 213

212

211

REAR DETECTION
(CAMERA)

1
VEHICLE

FRONT
DETECTION
(CAMERA)

FRONT DETECTION
(MILLIMETER WAVE RADAR)

REAR LATERAL
DETECTION
(LIDAR) — 214

FRONT LATERAL
DETECTION
(LIDAR) — 213

214

EP 4 600 102 B1

FIG. 3

FIG. 4

FIG. 5

EP 4 600 102 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021094955 A
- EP 4052982 A1